# EUROPÄISCHE PATENTSCHRIFT

(11) **EP 4 193 586 B1**
(45) Veröffentlichungstag und Bekanntmachung des Hinweises auf die Patenterteilung: **03.06.2026**
(21) Anmeldenummer: 21758167.7
(22) Anmeldetag: 10.08.2021
(51) Int. Cl.: H04B 1/3877, F16M 13/00, B62B 3/14, F16M 11/04, B60R 11/00, B60R 11/02, H04M 1/04

(54) **HALTER FÜR EIN MOBILES GERÄT**
HOLDER FOR A MOBILE DEVICE
SUPPORT POUR UN DISPOSITIF MOBILE

(30) Priorität: 10.08.2020 DE 102020121049
(43) Veröffentlichungstag der Anmeldung: 14.06.2023
(73) Patentinhaber: Foxylight AG, 8002 Zürich (CH)
(72) Erfinder: HEGAR, Christian, 3280 Murten (CH); VON MÜHLENEN, Ivo Lars Oliver, 8002 Zürich (CH)
(74) Vertreter: Pollard, Peter Julian
(86) Internationale Anmeldenummer: PCT/IB2021/057388
(87) Internationale Veröffentlichungsnummer: WO 2022/034507

(56) Entgegenhaltungen:
- US-A1- 2005 072 691
- US-A1- 2012 018 595

## Beschreibung

Die vorliegende Erfindung betrifft einen Halter für ein mobiles Gerät.

Gerätehaltevorrichtungen sind allgemein bekannt und werden dazu im Allgemeinen verwendet, um mobile Geräte wie Mobiltelefone, Tablets, tragbare Computer, GPS-Empfänger (Global Positioning System) und PDAs (Personal Digital Accessories) zu befestigen und sicher zu halten.

Aufgrund der großen Variationsbreite der Geräteabmessungen und Tastenpositionen müssen die Befestigungsmechanismen einstellbar sein und ein hohes Maß an Flexibilität bieten, wenn sie eine Vielzahl von Geräten aufnehmen wollen. Zum Beispiel beschreibt US 7 418 097 eine Klemme für elektronische Vorrichtungen, die zwei federbelastete Kantenklemmen (oder Arme) und ein federbelastetes Auslöseelement umfasst. Der Abstand zwischen den Klemmen ist variabel, und die mobile Vorrichtung wird durch Einklemmen der Vorrichtung zwischen den Klemmen geklemmt und durch Zusammenbewegen der Klemme wird deren Vorspannfeder zusammengedrückt. Durch Drücken des Auslösers werden die Klemmen freigegeben, die sich aufgrund ihrer Vorspannfeder trennen, um die mobile Vorrichtung freizugeben. Halter mit zwei Klemmen sind beispielsweise aus der US 2012/018595 A1 oder der US 2005/072691 A1 bekannt.

Die Unterbringung einer Vielzahl von Geräten hat jedoch zu komplizierten Halterungen geführt, wie z.B. in US 7 418 097 gezeigt, die teuer in der Herstellung und aufgrund der großen Anzahl von Komponenten anfällig für Defekte sind.

Ein Ziel der vorliegenden Erfindung ist es, einen verbesserten Halter für mobile Geräte anzubieten, der über einen simplen Aufbau verfügt und damit robust, einfach bedienbar, unkompliziert und einfach herzustellbar ist.

Im Sinne der Erfindung wird gemäß Anspruch 1 ein Halter für ein mobiles Gerät bereitgestellt.

Weitere bevorzugte Ausführungsformen sind den abhängigen Ansprüchen zu entnehmen.

Durch die Bereitstellung eines Bereichs mit nichtlinearem Widerstand gegen die Trennung der ersten Kantenklemme und der zweiten Kantenklemme wird im Vergleich zur Verwendung eines linearen Elements, wie z.B. einer Schraubenfeder, eine geringere Steigerungsrate des Trennwiderstands bei größeren Trennabständen erreicht.

Ein solcher Halter für ein mobiles Gerät umfasst eine erste und eine zweite Kantenklemme, die sich jeweils entlang einer ersten Achse erstrecken und so ausgebildet und angeordnet sind, dass sie entlang einer zweiten Achse zusammenwirken, um gegenüberliegende Kanten des mobilen Gerätes starr zu klemmen, wobei die zweite Achse die erste Achse schneidet.

Zusätzlich umfasst ein solcher Halter für ein mobiles Gerät einen oder mehrere Dehnungswiderstände, die so ausgebildet und angeordnet sind, dass sie einer Trennung der ersten Kantenklemme und der zweiten Kantenklemme entlang der zweiten Achse widerstehen.

Zusätzlich umfasst ein solcher Halter für ein mobiles Gerät, einen ersten Kantenauswerfer, der mechanisch mit der ersten Kantenklemme verbunden und so ausgebildet und angeordnet ist, um die erste Kantenklemme um die erste Achse zu drehen, um eine proximale Kante des mobilen Gerätes freizugeben, wenn eine erste vorbestimmte Ausstoßkraft gegen den ersten Kantenauswerfer aufgebracht wird.

Der eine oder die mehreren Dehnungswiderstände umfassen ein oder mehrere schlangenlinienförmige- oder zickzackförmige Formelemente, die so ausgebildet und angeordnet sind, dass sie einen Bereich mit nichtlinearem Widerstand gegen die Trennung der ersten und zweiten Kantenklemme bereitstellen.

Eine weitere Ausführungsform eines Halters umfasst eine erste Kantenklemme und eine zweite Kantenklemme, die so ausgebildet und angeordnet sind, dass sie im Wesentlichen parallele Kanten eines mobilen Gerätes starr festklemmen.

Ausführungsformen eines Halters umfassen einen oder mehrere Dehnungswiderstände, die so ausgebildet und angeordnet sind, dass sie einer Trennung der ersten Kantenklemme und der zweiten Kantenklemme in einer Ebene, die die erste Achse und die zweite Achse umfasst, widerstehen.

Ausführungsformen eines Halters umfassen einen oder mehrere Dehnungswiderstände ein oder mehrere Gelenke zwischen dem Dehnungswiderstand und der ersten und/oder zweiten Kantenklemme umfassen, die so ausgebildet und angeordnet sind, dass sie einen Bereich mit nichtlinearem Widerstand bereitstellen.

Ausführungsformen eines Halters umfassen einen oder mehrere Dehnungswiderstände mit einem oder mehreren entlang einem oder entlang der beiden Dehnungswiderstände oder zwischen einem oder zwischen den beiden Dehnungswiderständen und der ersten Kantenklemme und/oder der zweiten Kantenklemme angeordnete Gelenke umfassen, die derart ausgebildet und angeordnet sind, dass der oder die Dehnungswiderstände einen Bereich mit nichtlinearem Widerstand bereitstellen.

Ausführungsformen eines Halters umfassen ein oder mehrere Gelenke mit einer oder mehreren Vertiefungen, einer oder mehreren Kerben, einer oder mehreren Nuten, einer oder mehreren Vorsprünge, einer oder mehreren Erhebungen, einer oder mehreren Rippen, einer oder mehreren Querschnittsverminderungen, einer oder mehreren Verjüngungen, einem oder mehreren Tonnenprofilen, einem oder mehreren Sanduhrprofilen, einem oder mehreren Kugelprofilen, einem oder mehreren halbkugelförmigen Profilen, einem oder mehreren zylindrischen Profilen, oder können eine beliebige Kombination davon aufweisen.

Ausführungsformen eines Halters umfassen eine und eine zweite, oder auch mehrere Kantenklemmen, einen oder mehrere Dehnungswiderstände, ein oder mehrere Gelenke oder eine beliebige Kombination davon aus einem oder aus mehreren Elastomeren oder eine Kombination von Elastomeren, wobei Ausführungsformen eines Halters vorzugsweise monolithisch ausgebildet sind.

Besonders geeignete Elastomere sind vorteilhafterweise Polybutadien, synthetischer Kautschuk, Silikonkautschuk oder Naturkautschuk sowie weitere vulkanisierbare Thermoplaste.

Ausführungsformen eines Halters umfassen einen ersten Kantenauswerfer der so ausgebildet und angeordnet ist, um die erste Kantenklemme von der zweiten Kantenklemme wegzubewegen, um die proximale Kante des mobilen Gerätes freizugeben, wenn die erste vorbestimmte Auswurfkraft gegen den ersten Kantenauswerfer aufgebracht wird.

Ausführungsformen eines Halters umfassen ferner einen ersten Ausstoßvorsprung, der mechanisch mit dem ersten Kantenauswerfer verbunden ist, und so ausgebildet und angeordnet ist, um die erste Kantenklemme um die erste Achse zu drehen, wenn die erste vorbestimmte Ausstoßkraft gegen den ersten Kantenauswerfer ausgeübt wird, wodurch der erste Ausstoßvorsprung eine zweite vorbestimmte Ausstoßkraft gegen die bewegliche Vorrichtung entlang einer dritten Achse ausübt, wobei die dritte Achse die erste und die zweite Achse schneidet.

Ausführungsformen eines Halters umfassen ferner einen zweiten Kantenauswerfer, der mechanisch mit der zweiten Kantenklemme verbunden ist, und so ausgebildet und angeordnet ist, um die zweite Kantenklemme um die erste Achse zu drehen und/oder die zweite Kantenklemme von der ersten Kantenklemme wegzubewegen, um die proximale Kante des mobilen Gerätes freizugeben, wenn eine dritte vorbestimmte Auswurfkraft gegen den zweiten Kantenauswerfer ausgeübt wird.

Ausführungsformen eines Halters umfassen ferner ein oder mehrere Befestigungsmittel, die so ausgebildet und angeordnet sind, dass der Halter starr an einer Auflagefläche befestigbar ist.

Zu geeigneten Befestigungsmittel zählen ein Magnet, ein Elektromagnet, ein Solenoid, ein ferromagnetisches Metall, ein Klebstoff, ein Klebstoffkissen, ein Hakenverschluss, ein Schlaufenverschluss, ein Gewindeverschluss, ein Gewindeloch, eine Klemme, eine Federklemme, ein Riegel, ein Stift, eine Aussparung, ein Vorsprung, eine Nut, eine Halterung, eine Klammerhalterung, eine Schraubenhalterung, eine Bajonetthalterung, eine Reibungshalterung, eine glatte Oberfläche, ein Befestigungssauger, ein Klebekissen, eine elastische Schnur, oder eine beliebige Kombination davon.

Bei Ausführungsformen eines Halters ist das eine oder sind die mehreren Befestigungsmittel mechanisch am ersten Auswurfvorsprung befestigt.

Bei Ausführungsformen eines Halters schneiden sich die erste Achse und die zweite Achse im Wesentlichen senkrecht.

Bei Ausführungsformen eines Halters schneiden sich die zweite Achse und die dritte Achse im Wesentlichen senkrecht schneiden.

Bei Ausführungsformen eines Halters ist die erste vorbestimmte Ausstoßkraft für eine manuelle Anwendung durch einen Menschen geeignet.

Bei Ausführungsformen eines Halters ist die erste vorbestimmte Ausstoßkraft für eine manuelle Anwendung durch eine Hand eines Menschen geeignet.

Bei Ausführungsformen eines Halters liegt die erste vorbestimmte Ausstoßkraft im Bereich von 6 bis 10 Newton.

Bei Ausführungsformen eines Halters ist ein zweiter Ausstoßvorsprung, der mechanisch mit dem zweiten Kantenauswerfer verbunden ist, und so ausgebildet und angeordnet, um den ersten Kantenklemmer um die erste Achse zu drehen, wenn die dritte vorbestimmte Ausstoßkraft gegen den zweiten Kantenauswerfer ausgeübt wird, wodurch der zweite Ausstoßvorsprung eine vierte vorbestimmte Ausstoßkraft gegen das mobile Gerät entlang der dritten Achse ausübt.

Vorteilhaft ist es dabei, wenn die zweite vorbestimmte Ausstoßkraft und die vierte vorbestimmte Ausstoßkraft wesentlich unterschiedlich, ähnlich, oder im Wesentlichen gleich sind.

Ebenso vorteilhaft ist es, wenn die erste vorbestimmte Ausstoßkraft und die dritte vorbestimmte Ausstoßkraft im Wesentlichen unterschiedlich, ähnlich, oder im Wesentlichen gleich sind.

Ebenso vorteilhaft ist es, wenn die erste vorbestimmte Ausstoßkraft und die dritte vorbestimmte Ausstoßkraft für die manuelle Anwendung durch zwei Stellen an einer Hand eines Menschen geeignet sind.

Ebenso vorteilhaft ist es, wenn die dritte vorbestimmte Ausstoßkraft für die manuelle Anwendung durch einen Menschen geeignet ist.

Ebenso vorteilhaft ist es, wenn die dritte vorbestimmte Ausstoßkraft für die manuelle Anwendung durch eine Hand eines Menschen geeignet ist.

Weitere Vorteile und Eigenschaften ergeben sich aus den folgenden Figuren:
Fig. 1A, 1B und 1C zeigen eine Draufsicht auf eine erste Ausführung des mobilen Halters und zwei Querschnitte durch die Kantenklemme;
Fig. 2A, 2B und 2C zeigen eine Draufsicht auf eine zweite Ausführungsform des Halters für mobile Geräte und zwei Querschnitte durch die Kantenklemme;
Fig. 3A und 3B zeigen eine Draufsicht auf eine dritte Ausführungsform des Halters für mobile Geräte und einen Querschnitt durch die Kantenklemme;
Fig. 4A und 4B zeigen eine maßstabsgetreue Draufsicht einer vierten Ausführungsform des Halters für mobile Geräte und einen maßstabsgetreuen Querschnitt durch die Kantenklemme;
Fig. 4C ist eine maßstabsgetreue Zeichnung eines schlangenlinienförmigen Dehnungswiderstands; und
Fig. 5 zeigt eine Dehnungskraft-Charakteristik, die einen Bereich mit nichtlinearem Widerstand umfasst.

### Detaillierte Beschreibung

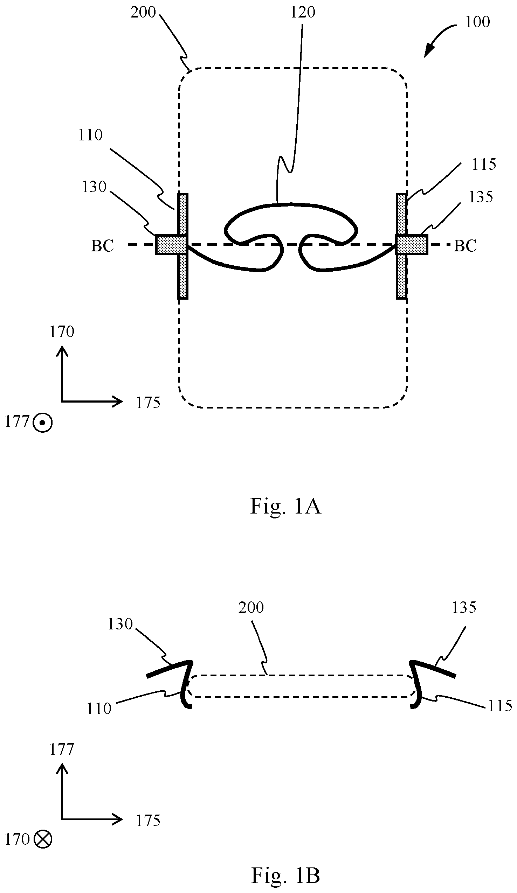

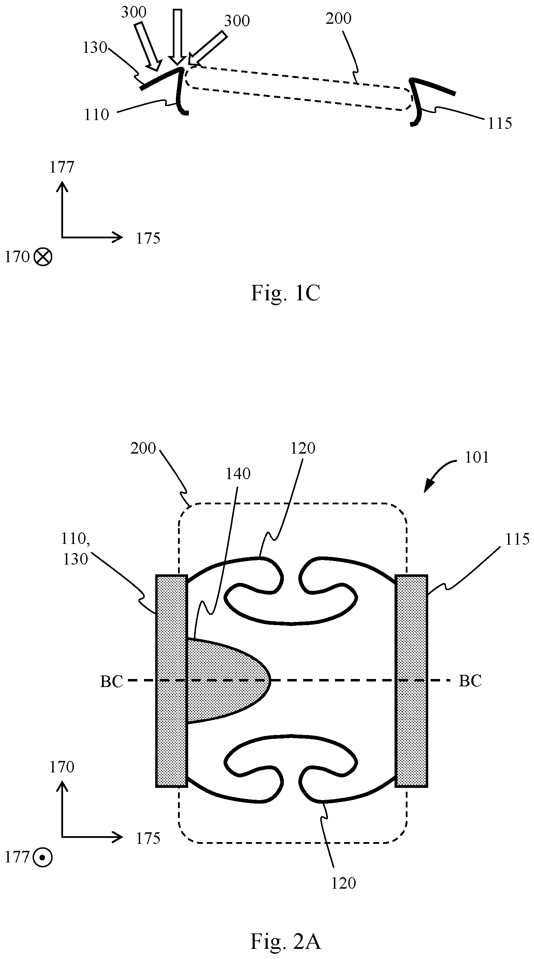

Fig. 1 zeigt einen Halter 100 für ein mobiles Gerät 200. Genauer gesagt zeigt Fig. 1A eine Draufsicht auf den Halter 100 von der Seite aus gesehen, auf der das mobile Gerät 200 eingesetzt und/oder entfernt wird. Fig. 1B zeigt einen Querschnitt durch die Kantenklemme entlang der in Fig. 1A dargestellten Linie BC-BC. Fig. 1C zeigt ebenfalls einen Querschnitt durch die Kantenklemme entlang der Linie BC-BC, aber eine der Kantenklemmen ist während des Auswurfs des Gerätes dargestellt.

Der Halter 100 umfasst eine erste Kantenklemme 110, die sich entlang einer ersten Achse 170 erstreckt, sowie eine zweite Kantenklemme 115, die sich ebenfalls entlang einer ersten Achse 170 erstreckt.

Der Umriss des mobilen Gerätes 200 ist durch gestrichelte Linien gekennzeichnet.

Optional können die erste Kantenklemme 110 und zweite Kantenklemme 115 so ausgebildet und angeordnet werden, dass im Wesentlichen parallele Kanten eines mobilen Gerätes 200 starr geklemmt werden, indem sie im Wesentlichen parallel zueinander liegen. In Ausführungsformen, bei denen sich die erste Kantenklemme 110 und die zweite Kantenklemme 115 über einen wesentlichen Teil der Kanten des mobilen Gerätes 200 erstrecken, kann die Gleichmäßigkeit der Klemmung dadurch verbessert werden, wenn die erste Kantenklemme 110 und die zweite Kantenklemme 115 im Wesentlichen parallel sind, um dem Grad der Parallelität der Kanten eines typischen mobilen Gerätes 200 zu entsprechen.

Die erste Kantenklemme 110 und die zweite Kantenklemme 115 sind so ausgebildet und angeordnet, dass sie entlang einer zweiten Achse 175 zusammenwirken, um gegenüberliegende Kanten des mobilen Gerätes 200 starr zu klemmen. Typischerweise kann eine Kraft von bis zu 15 Newton (N) aufgebracht werden. Die aufgebrachte Kraft kann mit dem Grad der während der Benutzung zu erwartenden Bewegung zusammenhängen. Zum Beispiel können geringere Kräfte zum Klemmen in einer Tischhalterung im Vergleich zu einer an einem Fahrrad anzubringenden Halterung verwendet werden.

Die zweite Achse 175 schneidet sich mit der ersten Achse 170. Der Winkel zwischen der ersten Achse 170 und der zweiten Achse 175 kann abhängig von der erwarteten Außenform der zu haltenden mobilen Geräte 200 vorbestimmt werden. Derzeit sind die meisten mobilen Geräte im Wesentlichen rechteckig, so dass es vorteilhaft sein kann, wenn sich die erste Achse 170 und die zweite Achse 175 im Wesentlichen senkrecht schneiden.

Im Rahmen dieser Beschreibung bezieht sich der Begriff "vorbestimmt" auf eine oder mehrere der folgenden Möglichkeiten zur Ermittlung von Werten:
- die während der Konstruktion der relevanten Teile unter Verwendung von Simulationsdaten und/oder Messungen ermittelt wurden;
- die während des Gebrauchs durch Messungen und/oder durch empirisch ("Try & Error") ermittelt (sie ist daher für eine spätere Verwendung vorbestimmt);
- die während des Gebrauchs ermittelt werden, was eine dynamische Bestimmung und optional eine dynamische Einstellung des relevanten Parameters oder der Ausbildung ermöglicht.

Der Halter 100 umfasst ferner einen oder mehrere Dehnungswiderstände 120, die so ausgebildet und angeordnet sind, dass sie einen Bereich mit nichtlinearem Widerstand gegen die Trennung der ersten Kantenklemme 110 und der zweiten Kantenklemme 115 entlang der zweiten Achse 175 bilden. Wenn der Halter 100 zur Verwendung mit im Wesentlichen planaren mobilen Geräten (200) ausgebildet ist, kann es vorteilhaft sein, den Dehnungswiderstand in einer Ebene bereitzustellen, die die erste Achse 170 und die zweite Achse 175 umfasst.

Es ist mindestens ein Dehnungswiderstand 120 erforderlich, der einen Grundkörper aus schlangenlinienförmigen oder zickzackförmigen Formelementen aufweist. Im Vergleich zu Schraubenfedern können schlangenlinienförmige oder zickzackförmige (und im Nachfolgenden nur noch als schlangenlinienförmig bezeichnete) Dehnungswiderstände 120 so ausgebildet werden, dass sie eine geeignete Dehnungswiderstandskennlinie aufweisen, indem Parameter wie die Mäanderform, die Mäanderabmessungen, die physikalischen Eigenschaften der verwendeten Materialien, die Querschnittsform und -abmessungen der Mäander sowie die Verwendung eines oder mehrerer Gelenke ausgewählt und variiert werden. In einigen Ausbildungen können weitere Verbindungen zwischen Mäandern verwendet werden, um die Dehnungswiderstandscharakteristik weiter zu modifizieren. Zum Beispiel kann es eher einem Steg als einem Mäander ähneln.

Ein schlangenlinienförmiger oder zickzackförmiger Dehnungswiderstand 120 ermöglicht einen hohen Grad der Anpassung der Dehnungswiderstandscharakteristik.

Zum Beispiel ist bei Trennungsabständen, die nur geringfügig größer als die erwartete Gerätegröße sind, ein Anfangswiderstand vorhanden. Sobald dieser Anfangswiderstand überwunden ist, kann außerhalb dieses Anfangsbereichs der Trennungsabstände ein relativ geringerer Widerstand bereitgestellt werden. Dies kann es für den Anwender einfacher machen, das Gerät 200 zu entfernen.

Zum Beispiel kann ein Halter 100 der einen im Wesentlichen konstanten Trennwiderstand über einen breiten Bereich von Trennungsabständen aufweist, dadurch eine Vielzahl von verschiedenen Größen mobiler Geräte 200 leichter halten.

Zum Beispiel kann ein Halter 100, der eine geringere Steigerungsrate des Trennwiderstandes bei größeren Trennungsabständen im Vergleich zur Verwendung eines linearen Elements, wie z.B. einer Schraubenfeder, aufweist, dadurch eine Vielzahl von Größen mobiler Geräte 200 leichter halten. Dies ist ein häufiges Problem bei bekannten Haltern, wenn sie sehr große (sehr breite) mobile Geräte 200 gehalten werden sollen, wäre die von einer linearen Feder ausgeübte Kraft für die praktische Anwendung zu groß dafür.

Darüber hinaus kann die Dehnungswiderstandscharakteristik weiter beeinflusst werden durch Hinzufügen von geeignet ausgebildeten Elementen, wie Federelementen, Federdrähte, Metallverstärkungen, Magnetpaare, die entweder anziehend oder abstoßend ausgebildet sind, elastische Elemente, zusätzliche elastische oder elastomere Elemente.

Darüber hinaus kann die Dehnungswiderstandscharakteristik weiter beeinflusst werden durch einen oder mehrere Dehnungswiderstände 120 mit einem oder mehreren Gelenken (nicht in Fig. 1 dargestellt), wobei das eine oder die mehreren Gelenke entlang dem Dehnungswiderstand 120 selbst anordenbar sind oder zwischen dem Dehnungswiderstand 120 und der ersten Kantenklemme 110 und/oder zweiten 115 Kantenklemme. Jede geeignete Gelenkkonfiguration kann als solches Gelenk verwendet werden, z.B. eine, die eine oder mehrere Aussparungen, eine oder mehrere Kerben, eine oder mehrere Nuten, einen oder mehrere Vorsprünge, eine oder mehrere Erhöhungen, einen oder mehrere Stege, eine oder mehrere Rippen oder eine beliebige Kombination davon aufweist.

Zusätzlich oder alternativ können auch eine oder mehrere Verkleinerungen der Materialquerschnittsausdehnung (Verengung) als Gelenk verwendet werden. Diese eine oder mehrere Verringerungen der Querschnittsausdehnung können z.B. über ihre Länge im Wesentlichen konstant sein, sich verjüngen, nebeneinander und gegenüberliegend verjüngt sein, ein tonnenförmiges Profil bilden, ein sanduhrförmiges Profil, ein im wesentlichen kugelförmiges Profil, ein im wesentlichen halbkugelförmiges Profil, ein zylindrisches Profil oder eine beliebige Kombination davon bilden.

Ein oder mehrere Gelenke können so ausgebildet und angeordnet werden, dass sie bei Bedarf eine zusätzliche Rotation ermöglichen. Zusätzlich oder alternativ können sie, wie ein Drehgelenk, ein Zielzugvolumen bieten. Solche Gelenke können verwendet werden, um den Grad des Dehnungswiderstands 120 bei unterschiedlichen Abständen der ersten Kantenklemme 110 und der zweiten Kantenklemme 115 weiter abzustimmen.

Der eine oder mehrere Dehnungswiderstände 120 sind so ausgebildet und angeordnet, dass sie im Bereich der Trennabstände, für die der Halter 100 vorgesehen ist, einen relativ hohen Widerstand gegen die Trennung der Klemmen 110, 115 bieten. Dies kann das Risiko verringern, dass das mobile Gerät 200 während des Gebrauchs herausfällt.

Tabellen der Geräteabmessungen sind weithin verfügbar, z.B. online abgerufen am 06.08.2020, unter www.dimensions.com/subcategories/digitaltypes. Typischerweise können Mobiltelefone in der Breite von 55 mm bis 80 mm variieren. Typischerweise können Tablets in der Breite von 70 mm bis 225 mm variieren.

Es kann daher vorteilhaft sein, eine Vielzahl von Haltern 100 vorzusehen, die jeweils so optimiert sind, dass sie einen relativ höheren Dehnungswiderstand für eine Reihe von Breiten mobiler Geräte bieten. Zum Beispiel klein entspricht einem Bereich von 50 mm bis 60 mm, mittel entspricht einem Bereich von 60 mm bis 70 mm und groß entspricht einem Bereich von 70 mm bis 80 mm für Mobiltelefone. In ähnlicher Weise können unterschiedlich optimierte Halter 100 für die Aufnahme von Tablets 200 verschiedener Größen vorgesehen werden.

Zusätzlich oder alternativ kann der Halter 100 so ausgebildet und angeordnet werden, dass der Benutzer den Bereich der nutzbaren Breiten auswählen oder modifizieren kann. Zum Beispiel, indem die Dehnungswiderstände 120 so ausgebildet werden, dass sie vom Benutzer austauschbar sind.

Zusätzlich oder alternativ dazu kann der Trennungsabstand zwischen der ersten Kantenklemme 110 und der zweiten Kantenklemme 115 einstellbar sein, zum Beispiel mit Hilfe eines Gewindeeinstellers.

Zusätzlich oder alternativ kann der Halter 100 so ausgebildet und angeordnet werden, dass er eine große Bandbreite an nutzbaren Breiten oberhalb eines Minimums erlaubt. Zum Beispiel würde ein Mindestabstand zwischen den Kantenklemme 110, 115 von ca. 35 mm bis 40 mm für Mobiltelefone das Halten einfacher Telefone und ein Mindestabstand von ca. 52 mm für komplexere Telefone, wie zum Beispiel Smartphones, ermöglichen. Bei diesem Abstand würde der Dehnungswiderstand 120 vorzugsweise so ausgebildet und angeordnet sein, dass sein Mindestdehnwert erreicht wird.

Schlangenlinienförmige Dehnungswiderstände 120 haben zusätzlich den Vorteil, dass sie relativ flach sind, so dass kompaktere Geräteträger 100 hergestellt werden können. Sie können auch bequem mit Techniken wie Extrusion, Gießen, Kleben oder 3D-Druck hergestellt werden.

Fig. 1B zeigt einen Querschnitt durch die Kantenklemme entlang der in Fig. 1A dargestellten Linie BC-BC. Der Umriss des Querschnitts des mobilen Gerätes 200 ist durch gestrichelte Linien dargestellt. Fig. 1B zeigt die Situation nach dem Einsetzen des mobilen Gerätes 200, und der Dehnungswiderstand 120 widersteht den Kantenklemme 110, 115, die sich entlang der zweiten Achse 175 trennen.

Die Kantenklemmen 110, 115 sind so ausgebildet und angeordnet, dass sie die Ränder des mobilen Gerätes 200 einspannen, indem sie zwei gegenüberliegende Wandflächen 110, 115 bilden, die einander zugewandt sind und sich entlang einer dritten Achse 177 erstrecken. Diese Wandflächen 110, 115 sind den Kanten der Vorrichtung 200 zugewandt, wenn sie in Gebrauch sind. Die Dehnung entlang der dritten Achse 177 kann auf der Grundlage des Bereichs der aufzunehmenden Dicken des mobilen Gerätes bestimmt werden. Typischerweise können nämlich Mobiltelefone in der Tiefe (Dicke) von 6,5 mm bis 10 mm variieren. Typischerweise können nämlich Tablets in der Tiefe (Dicke) von 5,5 mm bis 15 mm variieren. Die dritte Achse 177 schneidet sich mit der ersten Achse 170 und der zweiten Achse 175.

Es kann daher vorteilhaft sein, mehrere Halter 100 vorzusehen, die jeweils, bevorzugt kaskadiert, vorzugsweise in der vertikalen Höhe, für das Einspannen einer Reihe von Tiefen (Dicken) von mobilen Geräten optimiert sind. Zum Beispiel klein entspricht einem Bereich von 6 mm bis 9 mm, mittel entspricht einem Bereich von 8 mm bis 12 mm und groß entspricht einem Bereich von 11 mm bis 16 mm.

Zusätzlich oder alternativ dazu kann der Halter 100 so ausgebildet und angeordnet werden, dass der Benutzer den Bereich der nutzbaren Tiefen auswählen oder modifizieren kann. Zum Beispiel, indem die Kantenklemme 110, 115 so ausgebildet werden, dass sie vom Benutzer austauschbar sind. Zusätzlich oder alternativ dazu kann die Dehnung der Kantenklemme 110, 115 entlang der dritten Achse 177 verstellt werden, zum Beispiel durch Verwendung eines Stellschraubengewindes.

Zusätzlich oder alternativ kann der Halter 100 so ausgebildet und angeordnet werden, dass er eine große Auswahl an nutzbaren Tiefen bis zu einem Maximum zulässt. Zum Beispiel können sich die Wandflächen der Kantenklemmen 110, 115 etwa 10,6 mm entlang der dritten Achse 177 erstrecken.

Optional können die Wandflächen der Kantenklemmen 110, 115 ein Profil aufweisen, um das Greifen der gegenüberliegenden Kanten des mobilen Gerätes 200 zu verbessern.

Derzeit sind die meisten mobilen Geräte im Querschnitt im Wesentlichen rechteckig, so dass es vorteilhaft sein kann, wenn sich die zweite Achse 175 und die dritte Achse 177 im Wesentlichen senkrecht schneiden.

Die Wandflächen der Kantenklemmen 110, 115 können also im Wesentlichen senkrecht zur zweiten Achse 175 stehen. Wahlweise können eine oder mehrere Wandflächen im Querschnitt C-förmig oder L-förmig sein, um das Risiko zu verringern, dass das mobile Gerät 200 bei normalem Gebrauch herausgeschleudert wird.

Der Begriff "Auswerfen" wird im Rahmen der Beschreibung verwendet, um die Entnahme des mobilen Gerätes aus dem Halter 100 zu beschreiben. Dies kann Schritte umfassen, die aufgrund der Ausbildung und Anordnung des Halters 100 auftreten. Zum Beispiel wenn die Kantenklemme 110 C-förmig ist, dann bewirkt eine entsprechende Drehung der Kantenklemme 110 auch, dass die Kante des mobilen Gerätes 200 "hochgehoben" (vom Halter 100 wegbewegt) wird. Das "Auswerfen" kann auch manuelle Schritte und/oder manuell unterstützte Schritte umfassen. Zum Beispiel kann sich in einigen Ausbildungen die Kantenklemme 110 von der Kante des mobilen Gerätes 200 trennen, so dass der Benutzer die Kante des mobilen Gerätes 200 manuell herausheben kann.

Wahlweise können eine oder beide Wandflächen der Kantenklemmen 110, 115 leicht gegeneinander geneigt werden, so dass der Trennungsabstand auf der dem Halter 100 abgewandten Seite des mobilen Gerätes 200 etwas kleiner ist (die Oberseite wie in Fig. 1B und Fig. 1C dargestellt). Mit anderen Worten, eine oder beide Wandflächen der beiden Kantenklemmen 110, 115 können, im Querschnitt gesehen, mit der zweiten Achse 175 einen Winkel kleiner als 90 Grad (weniger als senkrecht), vorzugsweise ca. 75 Grad, bilden.

Der Halter 100 umfasst ferner einen ersten Kantenauswerfer 130, der mechanisch mit der ersten Kantenklemme 110 verbunden und so ausgebildet und angeordnet ist, dass er die erste Kantenklemme 110 um die erste Achse 170 dreht. Der Kantenauswerfer 130 kann sich an einer beliebigen Position an der ersten Kantenklemme 110 befinden, die für den Benutzer bequem zu erreichen ist, wenn er versucht, das mobile Gerät 200 auszuwerfen. Zum Beispiel kann es sich, wie in Fig. 1A dargestellt, um eine Lasche handeln, die starr an der ersten Kantenklemme 110 auf der dem Benutzer zugewandten und vom Halter 100 abgewandten Seite befestigt ist (die Oberseite, wie in Fig. 1B und Fig. 1C dargestellt). Sie kann an jeder geeigneten Position entlang der ersten Achse 170 angebracht werden und wird vorzugsweise an einer zentralen Position der ersten Kantenklemme 110 angebracht, um die Rotation über einen großen Abschnitt der ersten Kantenklemme 110 zu ermöglichen. Mehr als ein Kantenauswerfer 130 kann an verschiedenen Stellen entlang der Kantenklemme 110 angebracht werden.

Fig. 1C zeigt einen Querschnitt durch die Kantenklemmen 110, 115 entlang der Linie BC-BC (dargestellt in Fig. 1A), in dem Moment, in dem eine proximale Kante des mobilen Gerätes 200 von der ersten Kantenklemme 110 gelöst wird.

Wie in Fig. 1C dargestellt, ist der erste Kantenauswerfer 130 so ausgebildet und angeordnet, dass er die erste Kantenklemme 110 um die erste Achse 170 dreht, wenn eine erste vorbestimmte Ausstoßkraft 300 auf den ersten Kantenauswerfer 130 ausgeübt wird. Da dies zum Auswerfen des mobilen Gerätes 200 verwendet wird, sollte die Drehung der Kantenklemme ausreichen, um die proximale Kante der Vorrichtung 200 freizugeben.

In der Praxis kann es vorkommen, dass der Anwender die Kraft 300 an der optimalsten Position auf den ersten Kantenauswerfer 130 nicht mit der optimalsten Richtung anwendet, um eine optimale Rotation zu erzielen. Die Ausbildung und Anordnung ist daher so, dass ein breiter Bereich von Kräften 300, die in mehreren verschiedenen Winkeln 300 aufgebracht werden, ausreicht, um die Kante des mobilen Gerätes 200 auszuwerfen. Zusätzlich sollte auch die Auswirkung der Form der Wandflächen der Kantenklemme 110 und jedes Winkels berücksichtigt werden.

Der Halter 100 ist ähnlich ausgebildet und angeordnet, damit die Kraft ausreichend auf den ersten Kantenauswerfer 130 aufgebracht werden kann.

Der erste Kantenauswerfer 130 ist so ausgebildet und angeordnet, dass die proximale Kante des mobilen Gerätes 200 ausgeworfen wird, wenn ein Mensch die erste vorbestimmte Auswurfkraft 300 wie folgt anwendet:
- vorzugsweise manuell, mit einer oder zwei Händen;
- vorzugsweise mit einer Hand;
- noch bevorzugter ist die Verwendung von nur ein oder zwei Fingern einer Hand. Ein Finger kann ein Zeigefinger oder ein Daumen sein;
- am besten mit einem Finger und Daumen einer Hand
- oder einer Kombination davon.

Ergonomisch gesehen liegt der bevorzugte Bereich für die erste vorbestimmte Ausstoßkraft 300 bei 6 bis 10 Newton (N).

Für den Fachmann wird es offensichtlich sein, dass ähnliche Überlegungen gelten, wenn das mobile Gerät 200 in den Halter 100 eingesetzt wird, um starr zwischen der ersten Kantenklemme 110 und der zweiten Kantenklemme 115 eingespannt zu werden. Der Hauptunterschied besteht darin, dass der Benutzer unter Umständen mehr Positionen des Halters 100 erreichen kann, da diese (zumindest anfänglich) nicht durch das mobile Gerät 200 selbst blockiert werden.

Es kann vorteilhaft sein, ein ähnliches Verfahren und den gleichen Kantenauswerfer 130 beim Einsetzen der Vorrichtung 200 wie beim Auswerfen zu verwenden. Dadurch wird die Verwendung des Halters 100 besonders intuitiv.

Für den Fachmann wird es auch offensichtlich sein, dass nur eine der Kantenklemmen 110, 115 mechanisch mit einem Kantenauswerfer (130) verbunden werden muss.

Zum Beispiel kann eine der Kantenklemmen 110, 115 so ausgebildet und angeordnet werden, dass sie keine signifikante Rotation und/oder signifikante Bewegung zulässt, wobei sie dann als mechanischer Anschlag für das mobile Gerät 200 fungieren würde, und das Einsetzen/Auswerfen müsste an der anderen Kantenklemme 110, 115 erfolgen.

Es kann auch vorteilhaft sein, den ersten Kantenauswerfer 130 weiter so auszubilden und anzuordnen, um die erste Kantenklemme 110 von der zweiten Kantenklemme 115 wegzubewegen, um die proximale Kante des mobilen Gerätes 200 freizugeben, wenn die erste vorbestimmte Ausstoßkraft 300 gegen den ersten Kantenauswerfer 130 aufgebracht wird.

So kann zusätzlich zur Rotation um die erste Achse 170 eine zusätzliche Bewegung vorgesehen werden, um den proximalen Rand des mobilen Gerätes 200 leichter, zuverlässiger, schneller oder mit weniger Kraft auszustoßen.

Zusätzlich oder alternativ kann der Halter 100 einen zweiten Kantenauswerfer 135 umfassen, der mechanisch mit der zweiten Kantenklemme 115 verbunden und so ausgebildet und angeordnet ist, dass er die zweite Kantenklemme 115 um die erste Achse 170 dreht und/oder die zweite Kantenklemme 115 von der ersten Kantenklemme 110 wegbewegt, um die proximale Kante des mobilen Gerätes 200 freizugeben, wenn eine dritte vorbestimmte Ausstoßkraft (die zweite vorbestimmte Ausstoßkraft wird nachstehend beschrieben) gegen den zweiten Kantenauswerfer 135 aufgebracht wird.

Optional kann der Halter 100 so ausgebildet und angeordnet werden, dass zwei Kantenauswerfer 130, 135 zur Verfügung stehen. Sie können so ausgebildet und angeordnet werden, dass sie alternativ verwendet werden können, wobei jeder einzelne zum Auswerfen des mobilen Gerätes 200 verwendet werden kann. Eine kombinierte Verwendung kann auch zulässig sein, indem beispielsweise die erste vorbestimmte Ausstoßkraft 300 und die dritte vorbestimmte Ausstoßkraft so ausgebildet und angeordnet werden, dass sie wesentlich unterschiedlich, ähnlich oder im Wesentlichen gleich sind.

Der Fachmann wird erkennen, dass die Erläuterungen in dieser Offenlegung, die sich auf die Ausbildung und Anordnung der ersten vorbestimmten Ausstoßkraft 300 beziehen, auf die Ausbildung und Anordnung der dritten vorbestimmten Ausstoßkraft angewandt werden können.

Für den Fachmann wird es auch offensichtlich sein, dass die Ausbildung und Anordnung der beiden Kräfte im Wesentlichen gleich sein muss, dass die Konstruktion, Anordnung und Ausbildung der Kantenauswerfer 130, 135 und der entsprechenden Kantenklemmen 110, 115 nicht im Wesentlichen gleich sein muss.

Es kann vorteilhaft sein, die Konstruktion, Anordnung und Ausbildung der Kantenauswerfer 130, 135 und der entsprechenden Kantenklemmen 110, 115 so auszubilden und anzuordnen, dass sie im Wesentlichen gleich sind. In diesem Fall kann der Halter in beiden Richtungen verwendet werden.

Durch geeignete Ausbildung von zwei Kantenauswerfern 130, 135 und den entsprechenden Kantenklemmen 110, 115 kann es bequemer sein, den Halter 100 so auszubilden, dass die erste vorbestimmte Ausstoßkraft (300) und die dritte vorbestimmte Ausstoßkraft für die manuelle Anwendung durch zwei Finger an einer Hand eines Menschen geeignet sind.

Das mobile Gerät 200 kann dann mit im Wesentlichen gleichzeitigem Druck von zwei Finger entfernt werden, wobei auf beiden Seiten Druck ausgeübt wird.

Einer der Parameter, welche die Benutzung beeinflussen können und die Ausbildung und Anordnung einer oder mehrerer Kräfte beeinflussen können, sind die verwendeten Materialien und die Komponenten, die für diese Materialien verwendet werden.

Zum Beispiel kann die erste Kantenklemme 110, die zweite Kantenklemme 115, der eine oder mehrere Dehnungswiderstände 120, das eine oder die mehreren Gelenke 125 oder eine beliebige Kombination davon aus einem oder mehreren Elastomeren oder einer Kombination von Elastomeren bestehen, und diese Teile zusammen vorzugsweise als monolithisch ausgebildet sein.

Besonders vorteilhaft ist es, wenn es sich bei einem oder mehreren Elastomeren um ein Polyurethan oder einen Gummi handelt.

Wenn ein oder mehrere Elastomere in dem einen oder mehreren Dehnungswiderständen 120 enthalten sind, ist die Verwendung vorzugsweise auf den relevanten elastischen Verformungsbereich beschränkt. Bei allen Materialien, die in den Dehnungswiderständen 120 verwendet werden, sollte vorzugsweise ein erhebliches Maß an plastischer Verformung vermieden werden.

Die Verwendung von einem oder mehreren Elastomeren in den Kantenklemme 110, 115, insbesondere in den Wandflächen, wird bevorzugt, da dies das Risiko einer Beschädigung des mobilen Gerätes 200 beim starren Einspannen verringert.

Obwohl nicht in Fig. 1 dargestellt, kann der Halter 100 optional ein oder mehrere Befestigungsmittel umfassen, die so ausgebildet und angeordnet sind, dass der Halter 100 starr an einer Auflagefläche (nicht abgebildet) befestigt werden kann. Beispiele für Stützflächen sind z.B. ein Schreibtisch, ein Fahrzeugarmaturenbrett, eine Fahrzeugsonnenblende, ein Fahrzeuglenker, eine fotografische Halterung, eine Beleuchtungsvorrichtung, ein Kleidungsstück.

Je nach Art der Auflagefläche, der erforderlichen Befestigungsstärke und dem gewünschten Erscheinungsbild kann das eine oder mehrere Befestigungsmittel z.B. aus einem Magneten, einem Elektromagneten, einer Magnetspule, einem ferromagnetischen Metall, einem Klebstoff, einer Klebeunterlage, einem Hakenverschluss, einem Schlingenverschluss, einem Befestigungselement mit Gewinde, einem Gewindeloch, einer Klemme, einer Federklemme, einem Riegel, einem Stift, einer Aussparung, einem Vorsprung, einer Nut, einer Halterung, einer Klemmhalterung, einer Schraubhalterung, einer Bajonetthalterung, einer Reibungshalterung, einer glatte Oberfläche, einem Befestigungssauger, einem Klebepad, einer elastische Schnur oder einer beliebigen Kombination davon.

Es kann vorteilhaft sein, ein Befestigungsmittel zu verwenden, welches keine Energiequelle benötigt, um eine gewisse Befestigungsfestigkeit zu erreichen.

Zum Beispiel ein oder mehrere Permanentmagnete, ein oder mehrere bistabile Magnete, die der Benutzer mechanisch bewegen kann. Dies kann eine unerwünschte Ablösung während eines Stromausfalls und/oder beim Anfahren/Abschalten verhindern.

Wenn eine Energiequelle in der Auflagefläche enthalten ist, kann dies für einen oder mehrere Elektromagneten von Vorteil sein. Zum Beispiel einen bistabilen Rastmagneten, der so ausgebildet und angeordnet ist, dass er ohne die Energiequelle eine feste Position hält. In diesem Fall ist eine Energiequelle erforderlich, um ein gewisses Maß an Befestigungsfestigkeit zu reduzieren, was auch eine unerwünschte Ablösung während eines Stromausfalls und/oder beim Anfahren/Abschalten verhindern kann.

Optional kann der Halter 100 in Fig. 1 zusätzlich einen Vorsprung aufweisen, um die Fläche zu vergrößern, an der das eine oder mehrere Befestigungsmittel mechanisch befestigt werden können. Es kann zweckmäßig sein, einen solchen Vorsprung mechanisch mit der ersten Kantenklemme 110 und/oder der zweiten 115 Kantenklemme zu verbinden. Die indirekte Befestigung eines oder mehrerer Befestigungsmittel an der ersten Kantenklemme 110 und/oder zweiten Kantenklemme 115 kann jedoch die Kraft erhöhen, die aufgebracht werden muss (die erste Ausstoßkraft 300), um das mobile Gerät 200 auszustoßen. In diesem Fall ist es vorzuziehen, weniger steife Materialien zu verwenden und/oder einen weiteren Vorsprung vorzusehen, der ein oder mehrere Befestigungsmittel umfasst, die nicht mit der ersten Kantenklemme 110 und/oder mit der zweiten Kantenklemme 115 verbunden sind.

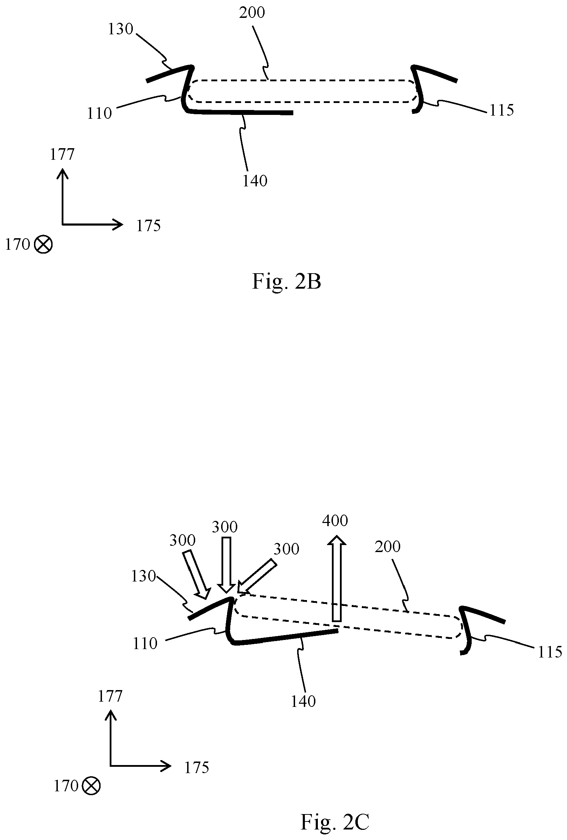

Fig. 2A, 2B und 2C zeigen eine Draufsicht einer zweiten Ausführungsform des Halters für mobile Geräte 101 und zwei Querschnitte durch die Kantenklemmen 110, 115.

Der Halter 101 in Fig. 2 ist bis auf eine Ausnahme identisch mit der ersten Ausführungsform (Halter 100), die oben in Bezug auf Fig. 1 beschrieben wurde. Der zweite Kantenauswerfer 135 ist in ähnlicher Weise mechanisch mit der zweiten Kantenklemme 115 verbunden, aber anstatt sich nur an einer Stelle als Lasche zu befinden, erstreckt er sich im Wesentlichen über die gesamte Dehnung der zweiten Kantenklemme 135 entlang der ersten Achse 170. Dies ist für den Anwender von Vorteil, da an jeder beliebigen Position die dritte vorbestimmte Auswerferkraft ausgeübt werden kann. Der erste Kantenauswerfer 130 ist in ähnlicher Weise mechanisch mit der ersten Kantenklemme 110 verbunden, aber anstatt sich nur an einer Stelle als Lasche zu befinden, erstreckt er sich im Wesentlichen über die gesamte Dehnung der ersten Kantenklemme 130 entlang der ersten Achse 170. Dies ist für den Anwender vorteilhaft, da an jeder beliebigen Position die erste vorgegebene Ausstoßkraft 300 ausgeübt werden kann. Siehe jedoch unten für die zusätzlichen Ausbildungsanforderungen aufgrund eines zusätzlichen Ausstoßvorsprungs 140.

Der Halter 101 umfasst einen zweiten Dehnungswiderstand 120, der auch eine oder mehrere schlangenlinienförmige oder zickzackförmige Formelemente umfasst, die so ausgebildet und angeordnet sind, dass sie einen Bereich mit nichtlinearem Widerstand gegen die Trennung der ersten Kantenklemme 110 und der zweiten Kantenklemme 115 bieten.

Für den Halter 101 sind der erste und der zweite Dehnungswiderstand 120 so ausgebildet und angeordnet, dass sie einer Trennung der ersten Kantenklemme 110 und der zweiten Kantenklemme 115 entlang der zweiten Achse 175 widerstehen, ähnlich wie die oben beschriebene Funktionalität für den einzelnen Dehnungswiderstand 120, der im Halter 100 enthalten ist. Dies kann vorteilhaft sein, da höhere Grade an Dehnungswiderstandskraft und/oder kleiner dimensionierte Dehnungswiderstände 120 vorgesehen werden können, um einen ähnlichen Grad an Dehnungswiderstand zu bieten.

Die Verwendung von zwei Dehnungswiderständen 120 ergibt ein symmetrischeres Erscheinungsbild, das einer geigenähnlichen oder kotiatähnlichen Form gleicht.

Der Halter 101 umfasst ferner einen ersten Auswurfvorsprung 140. Dieser funktioniert ähnlich wie die oben beschriebene C-förmige Kantenklemmwandfläche. Der erste Auswurfvorsprung wird weiter unten ausführlicher beschrieben.

Fig. 2A zeigt eine Draufsicht auf den Halter 101 von der Seite aus gesehen, auf der das mobile Gerät 200 eingesetzt und/oder entfernt wird.

Fig. 2B zeigt einen Querschnitt durch die Kantenklemme entlang der in Fig. 2A dargestellten Linie BC-BC. Der Umriss des Querschnitts des mobilen Gerätes 200 ist durch die gestrichelten Linien dargestellt. Fig. 2B zeigt die Situation nach dem Einsetzen des mobilen Gerätes 200, und die Dehnungswiderstände 120 widerstehen den Kantenklemme 110, 115, die sich entlang der zweiten Achse 175 trennen.

Der erste Auswurfvorsprung 140 ist mechanisch mit dem ersten Kantenauswerfer 130 verbunden und so ausgebildet und angeordnet, dass die Kantenklemme 110 sich um die erste Achse 170 dreht, wenn die erste vorbestimmte Auswurfkraft 300 gegen den ersten Kantenauswerfer 130 aufgebracht wird.

Fig. 2C zeigt einen Querschnitt durch die Kantenklemme 110, 115 entlang der Linie BC-BC (dargestellt in Fig. 2A), in dem Moment, in dem eine proximale Kante des mobilen Gerätes 200 von der ersten Kantenklemme 110 gelöst wird. Wie in Fig. 2C dargestellt, ist der erste Auswurfvorsprung 140 weiter ausgebildet und angeordnet, um eine zweite vorbestimmte Auswurfkraft 400 gegen die mobile Vorrichtung 200 entlang einer dritten Achse 177 auszuüben. Dies kann besonders vorteilhaft sein, da der Grad des manuellen Anhebens, der erforderlich sein kann, um das mobile Gerät 200 aus der Halterung 101 zu entfernen, stark reduziert ist und in einigen Ausführungsformen nicht mehr erforderlich ist. Die erste vorbestimmte Auswurfkraft 300 kann demzufolge reduziert werden.

Die dritte Achse 177 schneidet sich mit der ersten Achse 170 und die zweite Achse 175. Optional, wobei sich die zweite Achse 175 und die dritte Achse 177 im Wesentlichen senkrecht schneiden können.

Obwohl in Fig. 2 nicht dargestellt, kann der Halter 101 optional ein oder mehrere Befestigungsmittel umfassen, die so ausgebildet und angeordnet sind, dass der Halter 101 starr an einer Stützfläche befestigt werden kann (nicht dargestellt). Die Überlegungen ähneln denen, die oben für den Halter 100 von Fig. 1 beschrieben wurden.

Der Halter 101 von Fig. 2 umfasst jedoch weiterhin den ersten Auswurfvorsprung 140. Die relativ große Oberfläche macht ihn zu einem praktischen Bauteil, an dem das eine oder die mehreren Befestigungsmittel mechanisch befestigt werden können. Die Befestigung eines oder mehrerer Befestigungsmittel am ersten Auswurfvorsprung 140 kann jedoch die Kraft, die aufgebracht werden muss, nämlich die erste Auswurfkraft 300, um das mobile Gerät 200 auszuwerfen, erheblich erhöhen.

Wenn zum Beispiel die erste Kantenklemme 110, der erste Kantenauswerfer 130 und der erste Auswurfvorsprung 140 aus starren Materialien bestehen und starr miteinander verbunden sind, dann wird jedes Befestigungsmittel, das im ersten Auswurfvorsprung 140 enthalten ist, der Drehung der Kantenklemme 110 um die erste Achse 170 einen hohen Widerstand entgegensetzen. Als Test wurde ein Permanentmagnet mit einem Durchmesser von ca. 19 mm in den ersten Auswurfvorsprung 140 eingesetzt, und die Auflagefläche bestand aus einem ferromagnetischen Metall, das einen hohen Grad an Fixierung bietet. In Ermangelung von Befestigungsmitteln lag die erste Ausstoßkraft 300 typischerweise im Bereich von 6 bis 10 Newton. Nach Einbeziehung des Permanentmagneten betrug die erste Ausstoßkraft 300 12 bis 15 Newton.

Wenn die Erhöhung der ersten Ausstoßkraft 300 bei bestimmten Ausführungsformen nicht akzeptabel ist, ist es vorzuziehen, weniger steife Materialien zu verwenden und/oder einen weiteren Vorsprung mit einem oder mehreren Befestigungsmitteln vorzusehen, der nicht mit der ersten Kantenklemme 110 oder zweiten Kantenklemme 115 verbunden ist.

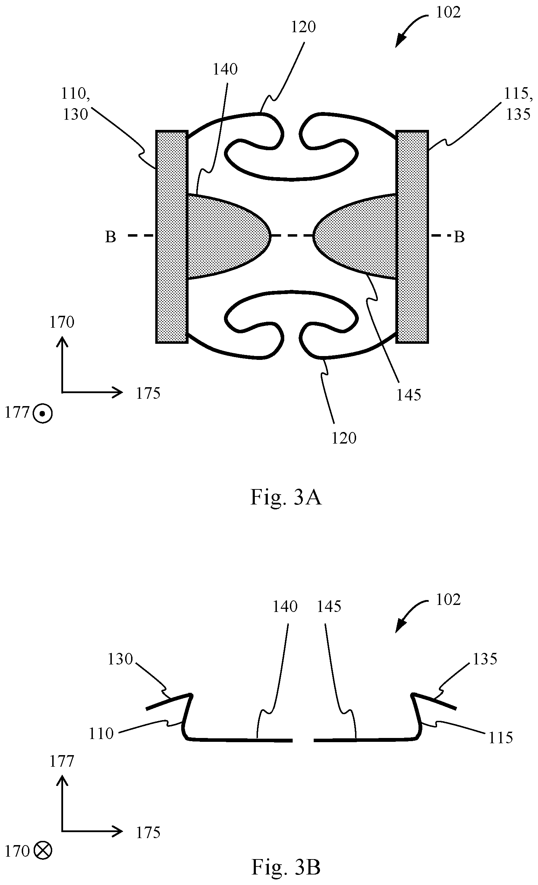

Fig. 3A und 3B zeigen eine Draufsicht einer dritten Ausführungsform des Halters für mobile Geräte 102 und einen Querschnitt durch die Kantenklemme.

Der Halter 102 von Fig. 3 ist bis auf eine Ausnahme identisch mit der zweiten Ausführungsform (Halter 101), die oben in Bezug auf Fig. 2 beschrieben wurde. Der Halter 102 umfasst ferner einen zweiten Auswurfvorsprung 145. Dieser funktioniert in ähnlicher Weise wie der erste Auswurfvorsprung 140 und wird weiter unten ausführlicher beschrieben.

Fig. 3A zeigt eine Draufsicht auf den Halter 102 von der Seite aus gesehen, auf der das mobile Gerät 200 eingesetzt und/oder entnommen wird.

Fig. 3B zeigt einen Querschnitt durch die Kantenklemme entlang der in Fig. 3A dargestellten Linie B-B. Der Umriss des Querschnitts des mobilen Gerätes 200 ist durch gestrichelte Linien dargestellt. Fig. 3B zeigt die Situation nach dem Einsetzen des mobilen Gerätes 200, und die Dehnungswiderstände 120 widerstehen den Kantenklemmen 110, 115, die sich entlang der zweiten Achse 175 trennen.

Ähnlich wie der Halter 101 von Fig. 2 ist der erste Auswurfvorsprung 140 mechanisch mit dem ersten Kantenauswerfer 130 verbunden und so ausgebildet und angeordnet, dass er die erste Kantenklemme 110 um die erste Achse 170 dreht, wenn die erste vorbestimmte Auswurfkraft 300 gegen den ersten Kantenauswerfer 130 aufgebracht wird.

Der Halter 102 von Fig. 3 umfasst jedoch weiterhin den zweiten Ausstoßvorsprung 145, der mechanisch mit dem zweiten Kantenauswerfer 135 verbunden und so ausgebildet und angeordnet ist, dass er die zweite Kantenklemme 115 um die erste Achse 170 dreht, wenn die dritte vorbestimmte Ausstoßkraft (nicht dargestellt, aber analog zur ersten Ausstoßkraft 300) gegen den zweiten Kantenauswerfer 135 aufgebracht wird.

Der Augenblick, in dem die proximalen Ränder des mobilen Gerätes 200 von der ersten Kantenklemme 110 und der zweiten Kantenklemme 115 gelöst werden, ist nicht dargestellt. Es sei auf Fig. 2C verwiesen, das ein einseitiges Auswerfen zeigt. Der Halter 102, wie in Fig. 3 dargestellt, ist in analoger Weise für beidseitigen Auswurf ausgebildet.

Ähnlich wie der Halter 101 von Fig. 2 ist der erste Auswurfvorsprung 140 weiterhin so ausgebildet und angeordnet, dass er eine zweite vorbestimmte Auswurfkraft 400 gegen das mobile Gerät 200 entlang einer dritten Achse 177 ausübt.

Der Halter 102 von Fig. 3 umfasst jedoch weiterhin den zweiten Auswurfvorsprung 145, der so ausgebildet und angeordnet ist, dass er eine vierte vorbestimmte Auswurfkraft gegen das mobile Gerät 200 entlang einer dritten Achse 177 ausübt.

Dies kann besonders vorteilhaft sein, da der Grad des manuellen Anhebens, der erforderlich sein kann, um das mobile Gerät 200 aus der Halterung 102 zu entfernen, stark reduziert ist und in einigen Ausbildungen nicht mehr erforderlich ist. Die erste vorbestimmte Ausstoßkraft 300 und die dritte vorbestimmte Ausstoßkraft können beide reduziert werden.

Ähnliche Probleme wie oben erwähnt, können auftreten, wenn ein oder mehrere Befestigungsmittel im ersten Auswurfvorsprung 140 und/oder im zweiten Auswurfvorsprung 145 enthalten sind. Es kann vorteilhaft sein, stark fixierende Mittel in nur einem Auswurfvorsprung 140, 145 einzubinden. Dies ermöglicht sowohl einen verbesserten Auswurf (begrenzt auf nur eine Seite) als auch eine starke Fixierung.

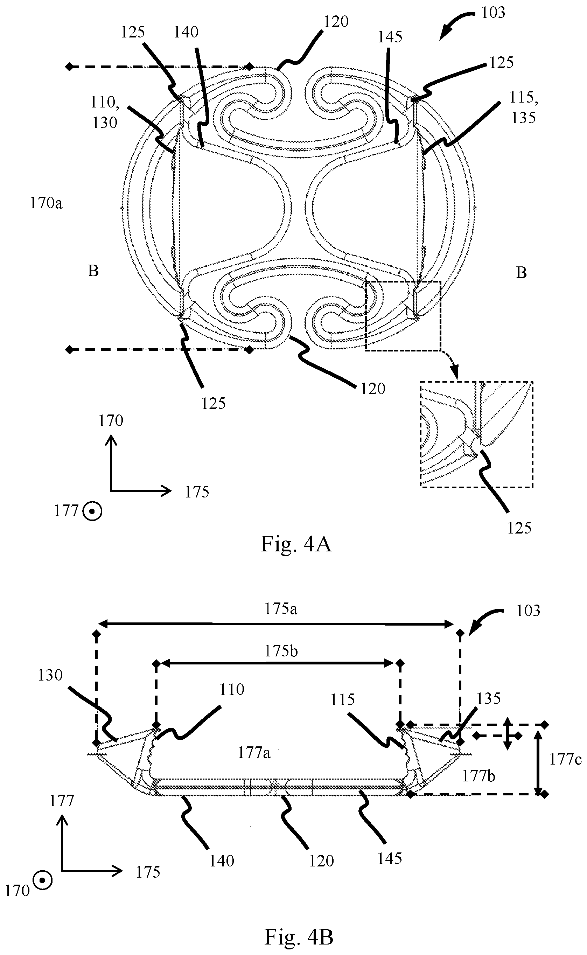

Fig. 4A und 4B zeigen eine maßstabsgetreue Draufsicht einer vierten Ausführungsform des Halters für mobile Geräte 103 und einen maßstabsgetreuen Querschnitt durch die Kantenklemme.

Die maßstabsgetreuen Zeichnungen sollten nicht als Beschränkung der Erfindung auf bestimmte Maße und Verhältnisse interpretiert werden. Sie dienen lediglich dazu, dem Fachmann einen Ausgangspunkt für die weitere Beurteilung und für routinemäßige Versuche zu geben. Durch die Befolgung von Routineschritten, die von den allgemeinen Hinweisen im Rest dieser Offenbarung geleitet werden, wird der Fachmann in der Lage sein, eine große Vielfalt von Haltern zur Verfügung zu stellen, die zum Halten einer Vielzahl von Vorrichtungen geeignet sind.

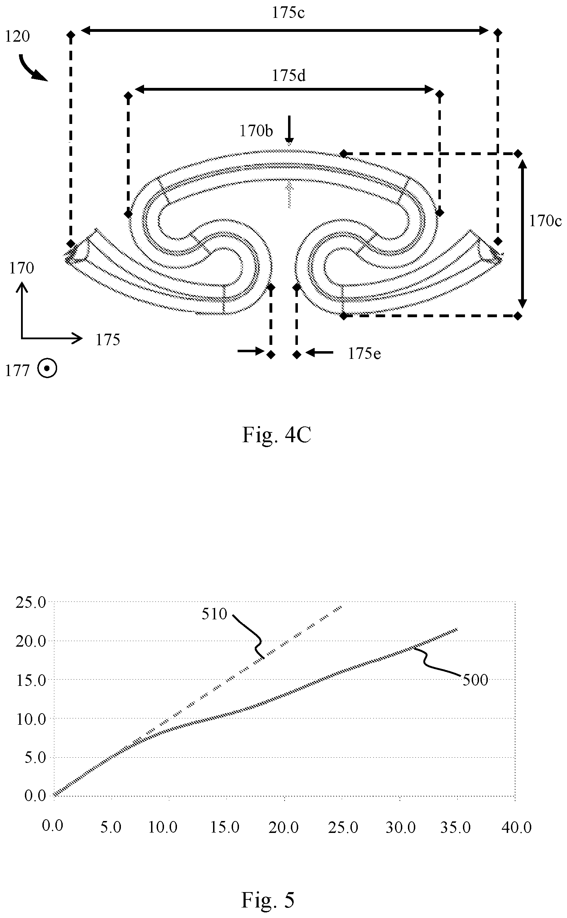

Der Halter 103 von Fig. 4 ist bis auf eine Ausnahme identisch mit der dritten Ausführungsform (Halter 102), die oben in Bezug auf Fig. 3 beschrieben wurde. Die Ansichten sind weniger schematisch und maßstabsgetreu. Die Wandflächen der Kantenklemme 130, 135, die den Rändern der Vorrichtung 200 zugewandt sind, sind gekrümmt, wodurch die Klemmung an zwei Positionen nahe den gegenüberliegenden Enden der Kantenklemme 130, 135 konzentriert wird. Diese Krümmung bietet eine bequeme Aussparung, um die Wahrscheinlichkeit zu verringern, dass eine Taste gedrückt wird. Solche Knöpfe finden sich häufig an den Kanten der Kantenklemmen 200. Die Greifabschnitte des ersten Kantenauswerfers 130 und des zweiten Kantenauswerfers 135 der Kantenklemmen 110, 115 weisen zur Verbesserung des Greifens Stege auf. Diese sind im Querschnitt in Fig. 4B zu sehen

Ähnlich wie der Halter 102 von Fig. 3 umfasst der Halter 103 zwei Dehnungswiderstände 120. Im Halter 103 umfasst jedoch jeder Dehnungswiderstand 120 zwei Gelenke 125, eines an jedem Verbindungspunkt zwischen dem Dehnungswiderstand 120 und dem Rest des Halters 103. Mit anderen Worten, der Halter 103 weist vier Gelenken 125 auf. Wie aus der Vergrösserung ersichtlich ist, weist jedes Gelenk 125 eine oder mehrere Querschnittsverkleinerungen auf. Genauer gesagt, jedes Gelenk 125 umfasst eine oder mehrere Verjüngungen. Noch konkreter: Jedes Gelenk 125 umfasst zwei nebeneinander liegende Konen, die ein einer Sanduhr ähnelndes Längsprofil bilden. Dies kann vorteilhaft sein, weil es eine Schwenkstelle am kleinsten Querschnitt bietet, die verwendet wird, wenn sich die Kantenklemmen 110, 115 auseinander bewegen (ein größerer Trennungsabstand) und/oder wenn sie sich zusammen bewegen (ein kleinerer Trennungsabstand).

Der Halter 103 ist im Wesentlichen monolithisch, da er aus einem Polybutadien, einem Silikonkautschuk, einem synthetischen Kautschuk, Naturkautschuk und/oder einem Material mit Eigenschaften wie Naturkautschuk geformt wurde.

Die Auswurfvorsprünge 140, 145 werden nicht als solche verwendet. Jede weitere umfasst einen Permanentmagneten als Befestigungsmittel für den Halter 103 an einer Auflagefläche. Aufgrund der Elastizität des Polyurethans wird das mobile Gerät allein durch Aufbringen der ersten Ausstoßkraft auf den ersten Kantenauswerfer 130 der ersten Kantenklemme 110 und/oder durch Aufbringen der dritten Ausstoßkraft auf den zweiten Kantenauswerfer 135 der zweiten Kantenklemme 115 ausgeworfen.

Fig. 4A zeigt eine maßstabsgetreue Draufsicht auf den Halter 103 von der Seite aus gesehen, auf der das mobile Gerät 200 eingesetzt und/oder entfernt wird.

In diesem Beispiel beträgt die maximale senkrechte Dehnung 170a entlang der ersten Achse 170 (bzw. die Höhe bei Betrachtung von der Seite, auf der die Vorrichtung 200 eingesetzt und/oder entfernt wird) etwa 60 mm.

Fig. 4B zeigt einen maßstabsgerechten Querschnitt durch die Kantenklemme entlang der in Fig. 4A dargestellten Linie B-B. Fig. 4B zeigt die Situation, in der kein mobiles Gerät eingesetzt wurde.

In diesem Beispiel beträgt die maximale senkrechte Dehnung 175a entlang der zweiten Achse 175 (oder die Breite bei Betrachtung von der Seite, auf der die Vorrichtung 200 eingesetzt und/oder entfernt wird) etwa 75 mm.

In diesem Beispiel kann der durchschnittliche senkrechte Trennungsabstand 175b entlang der zweiten Achse 175b an der Oberseite, wie in Fig. 4B dargestellt, als minimaler Trennungsabstand angesehen werden. Hier beträgt er etwa 52 mm, so dass der Halter 103 für Geräte 200 mit einer Dehnung von 52 mm und höher empfohlen würde.

Der Moment, in dem die proximalen Ränder des mobilen Gerätes 200 von der ersten Kantenklemme 110 und der zweiten Kantenklemme 115 gelöst werden, wird nicht dargestellt. Es sei auf Fig. 1C verwiesen, das einen einseitigen Auswurf zeigt. Der Halter 103, wie in Fig. 4 dargestellt, ist in analoger Weise für beidseitigen Auswurf ausgebildet. Wie oben beschrieben, werden in dieser Ausführungsform die Auswurfvorsprünge 140, 145 nicht als solche verwendet.

In diesem Beispiel sind die beiden Wandflächen der Kantenklemmen 110, 115 leicht zueinander geneigt, so dass der Trennungsabstand 175b auf der dem Halter 100 abgewandten Seite des mobilen Gerätes 200 etwas kleiner ist (die Oberseite wie in Fig. 4B dargestellt). Hier beträgt der obere Trennabstand 175b ca. 52 mm, der untere Trennabstand ca. 55 mm

Mit anderen Worten, die beiden Wandflächen der Kantenklemmen 110, 115 bilden im Querschnitt von Fig. 4B gesehen mit der zweiten Achse 175 jeweils einen Winkel kleiner als 90 Grad (weniger als senkrecht), vorzugsweise ca. 75 Grad. Hier beträgt der Winkel auf jeder Seite ca. 78 Grad.

Die maximale senkrechte Dehnung 177a ist entlang der dritten Achse 177 eines Dehnungswiderstandes 120 (Dicke) dargestellt. Hier beträgt sie ca. 3,4 mm und der Querschnitt des Dehnungswiderstandes 120 ist annähernd kreisförmig. Der Außendurchmesser des Querschnitts beträgt also ca. 3,4 mm.

Die mittlere senkrechte Dehnung 177b ist entlang der dritten Achse 177 einer Mittelebene der Kantenklemme 110, 115 dargestellt. Hier beträgt sie etwa 8,5 mm. Dies ist auch ungefähr der größte Abstand entlang der dritten Achse 177, um den der zweite Kantenauswerfer 135 zum Einsetzen und/oder Entfernen des mobilen Gerätes 200 bewegt werden kann.

Die durchschnittliche senkrechte Dehnung 177c ist entlang der dritten Achse 177 einer oberen Ebene (wie abgebildet) der Kantenklemmen 110, 115 dargestellt. Hier sind es etwa 14 mm. Dies ist auch ungefähr die maximale senkrechte Dehnung entlang der dritten Achse 177 des Halters (oder die maximale Dicke).

Die durchschnittliche Dehnung der Wandflächen 110, 115, die den Rändern des mobilen Gerätes 200 zugewandt sind (wenn es in Gebrauch ist), beträgt im abgebildeten Fall etwa 13 mm.

Fig. 4C ist eine maßstabsgetreue Zeichnung eines der beiden schlangenlinienförmigen Dehnungswiderstände 120, wie sie in Fig. 4A (Draufsicht) und 4B (Querschnitt) dargestellt sind.

Die maximale senkrechte Dehnung 170b ist entlang der ersten Achse 170 von einem der Dehnungswiderstände 120 (Dicke) dargestellt. Hier beträgt sie ca. 3,4 mm und der Querschnitt des Dehnungswiderstandes 120 ist annähernd kreisförmig. Der Außendurchmesser des Querschnitts beträgt also ca. 3,4 mm

Die maximale senkrechte Dehnung 175c ist entlang der zweiten Achse 175 des schlangenlinienförmigen Dehnungswiderstands 120 zwischen den Verbindungspunkten mit dem Rest des Halters 103 (oder Breite) dargestellt. In diesem Fall bestehen die Verbindungspunkte aus Gelenken 125 auf jeder Seite, es ist also ungefähr die Dehnung zwischen den Gelenken 125. In diesem Fall beträgt sie ungefähr 50,5 mm.

Die maximale senkrechte Dehnung 170c ist entlang der ersten Achse 170 des schlangenlinienförmigen Dehnungswiderstands 120 (oder Höhe) dargestellt. In diesem Fall beträgt sie ungefähr 19 mm.

Die maximale senkrechte Dehnung 175d ist6 entlang der zweiten Achse 175 des Hauptmäanders des schlangenlinienförmigen Dehnungswiderstands 120 (oder Breite) dargestellt. In diesem Fall beträgt sie ungefähr 36 mm.

Der minimale senkrechte Trennungsabstand 175e ist entlang der zweiten Achse 175 zwischen den Ästen des Mäanders des Schlangenwiderstands 120 dargestellt. In diesem Fall beträgt sie etwa 3 mm.

Fig. 5 zeigt ein Beispiel für eine Dehnungskraft-Kennlinie 500, die einen Bereich mit nichtlinearem Widerstand aufgrund der Verwendung einer schlangenlinienförmigen Dehnungswiderstands 120 umfasst. Sie ist als Kurve 500 unter Verwendung einer durchgezogenen Linie dargestellt.

Die von einem Dehnungswiderstand ausgeübte Kraft in Newton wird entlang der vertikalen (oder y-) Achse von 0,0 N bis 25,0 N aufgetragen. Die Dehnung des Dehnungswiderstandes in mm wird entlang der horizontalen (oder x-) Achse von 0,0 mm bis 40,0 mm aufgetragen.

Die Dehnungskraft-Kennlinie 500 durchläuft die folgenden Punkte:

| **Dehnung [mm] (x)** | **Kraft [N] (y)** |
|---|---|
| 0.0 | 0.0 |
| 5.0 | 5.0 |
| 10.0 | 8.5 |
| 15.0 | 10.5 |
| 20.0 | 13.0 |
| 25.0 | 16.0 |
| 30.0 | 18.5 |

Fig. 5 zeigt ferner eine lineare Dehnungskraft-Kennlinie 510, die als gestrichelte Gerade dargestellt ist. Sie verläuft durch die (x,y)-Punkte (0,0); (5,5); (10,10); (15,15); (20,20) und (25,25). Dies stellt eine typische Dehnungs-Widerstands-Kennlinie einer linearen Feder, wie z.B. einer Schraubenfeder, dar.

Die nichtlineare Dehnungskennlinie 500 folgt der linearen Dehnungskraftlinie 510 von dem (x,y)-Punkt (0,0) bis ca. (6mm,6N). Ab diesem Punkt bietet die nichtlineare Kennlinie 500 bei größeren Trennabständen (hier bei Trennungen über ca. 10mm) einen geringeren Anstieg der Dehnkraft (bzw. des Trennwiderstandes) als die lineare Kennlinie 510. Das bedeutet für diesen Fall, dass der erfindungsgemäße Halter ein leichteres Einbringen, ein leichteres Entnehmen und ein leichteres Halten eines breiten Größenspektrums des mobilen Gerätes 200 ermöglicht, da der Kraftaufwand des Anwenders zum Trennen der Kantenklemme 110, 115 geringer ist. Wenn beispielsweise ein nichtlinearer Widerstand 500 bei einem Abstand von ca. 25 mm verwendet wird, muss statt einer Kraft von 25 N (Newton) einer Kraft von 16 N (Newton) entgegengewirkt werden.

### Liste der Bezugszeichen

| Nr. | Bezeichnung |
|---|---|
| 100 | Halter - erste Ausführungsform |
| 101 | Halter - zweite Ausführungsform |
| 103 | Halter - dritte Ausführungsform |
| 104 | Halter - vierte Ausführungsform |
| 110 | eine erste Kantenklemme |
| 115 | eine zweite Kantenklemme |
| 120 | ein oder mehrere Dehnungswiderstände |
| 125 | ein oder mehrere Gelenke |
| 130 | ein erster Kantenauswerfer |
| 135 | ein zweiter Kantenauswerfer |
| 140 | ein erster Auswurfvorsprung |
| 145 | ein zweiter Auswurfvorsprung |
| 170 | erste Achse (z.B. x) |
| 170a | maximale senkrechte Dehnung entlang der ersten Achse (Höhe) |
| 170b | maximale senkrechte Dehnung entlang der ersten Achse eines der Dehnungswiderstände (Dicke) |
| 170c | maximale senkrechte Dehnung entlang der ersten Achse eines schlangenlinienförmigen Widerstandselements |
| 175 | zweite Achse (z.B. x oder y) |
| 175a | maximale senkrechte Dehnung entlang der zweiten Achse (Breite) |
| 175b | durchschnittlicher senkrechter Trennungsabstand entlang der zweiten Achse (minimaler Bereich) |
| 175c | maximale senkrechte Dehnung entlang der zweiten Achse des schlangenlinienförmigen Widerstandselements (zwischen Verbindungspunkten) (oder Breite) |
| 175d | maximale senkrechte Dehnung entlang der zweiten Achse des Hauptmäanders des schlangenlinienförmigen Widerstandselements |
| 175e | minimaler senkrechter Trennungsabstand entlang der zweiten Achse zwischen Zweigen eines Mäanders mit schlangenlinienförmigen Widerstandselement |
| 177 | dritte Achse (z.B. z) |
| 177a | maximale senkrechte Dehnung entlang der dritten Achse des Dehnungswiderstandes (Dicke) |
| 177b | mittlere senkrechte Dehnung entlang der dritten Achse der Mittelebene der Kantenklemmen |
| 177c | mittlere senkrechte Dehnung entlang der dritten Achse der oberen Ebene (wie abgebildet) der Kantenklemme |
| 200 | mobiles Gerät |
| 300 | eine erste vorbestimmte Ausstoßkraft |
| 400 | eine zweite vorbestimmte Ausstoßkraft |
| 500 | eine Dehnungskraft-Charakteristik mit einem Bereich nichtlinearen Widerstands |
| 510 | eine lineare Dehnungskraft-Kennlinie |

## Patentansprüche

1. Halter (100, 101, 102, 103) für ein mobiles Gerät (200), wobei der Halter (100, 101, 102, 103) umfasst:
• eine erste (110) und eine zweite (115) Kantenklemme, die sich jeweils entlang einer ersten Achse (170) erstrecken und so ausgebildet und angeordnet sind, dass sie entlang einer zweiten Achse (175) zusammenwirken, um gegenüberliegende Kanten des mobilen Gerätes (200) starr zu klemmen, wobei die zweite Achse (175) die erste Achse (170) schneidet;
• einen oder mehrere Dehnungswiderstände (120), die so ausgebildet und angeordnet sind, dass sie einer Trennung der ersten Kantenklemme (110) und der zweiten Kantenklemme (115) entlang der zweiten Achse (175) widerstehen;
• einen ersten Kantenauswerfer (130), der mechanisch mit der ersten Kantenklemme (110) verbunden und so ausgebildet und angeordnet ist, dass er die erste Kantenklemme (110) um die erste Achse (170) dreht, um eine proximale Kante des mobilen Gerätes (200) freizugeben, wenn eine erste vorbestimmte Ausstoßkraft (300) gegen den ersten Kantenauswerfer (130) aufgebracht wird;
wobei der eine oder die mehreren Dehnungswiderstände (120) ein oder mehrere schlangenlinienförmige- oder zickzackförmige Formelemente umfasst, die so ausgebildet und angeordnet sind, dass sie einen Bereich mit nichtlinearem Widerstand gegen die Trennung der ersten (110) und zweiten (115) Kantenklemme bereitstellen.

2. Halter nach Anspruch 1, wobei die erste Kantenklemme (110) und die zweite Kantenklemme (115) so ausgebildet und angeordnet sind, dass sie parallele Kanten eines mobilen Gerätes (200) starr festklemmen.

3. Halter nach Anspruch 1 oder 2, wobei ein oder mehrere Dehnungswiderstände (120) so ausgebildet und angeordnet sind, dass sie einer Trennung der ersten Kantenklemme (110) und der zweiten Kantenklemme (115) in einer Ebene, die die erste Achse (170) und die zweite Achse (175) umfasst, widerstehen.

4. Halter nach einem der vorhergehenden Ansprüche, wobei die erste Kantenklemme (110), die zweite Kantenklemme (115), der eine oder die mehreren Dehnungswiderstände (120), das ein oder die mehreren Gelenke (125) oder eine beliebige Kombination davon ein oder mehrere Elastomere oder eine Kombination von Elastomeren umfassen.

5. Halter nach Anspruch 4, wobei ein oder mehrere Elastomere ein Polybutadien, ein synthetischer Kautschuk, ein Silikonkautschuk oder ein Naturkautschuk ist oder sind.

6. Halter nach einem der vorhergehenden Ansprüche, wobei der erste Kantenauswerfer (130) ferner so ausgebildet und angeordnet ist, dass er die erste Kantenklemme (110) von der zweiten Kantenklemme (115) wegbewegt, um die proximale Kante des mobilen Gerätes (200) freizugeben, wenn die erste vorbestimmte Auswurfkraft (300) gegen den ersten Kantenauswerfer (130) aufgebracht wird.

7. Halter nach einem der vorhergehenden Ansprüche, wobei der Halter (100, 101, 102, 103) ferner einen ersten Ausstoßvorsprung (140) umfasst, der mechanisch mit dem ersten Kantenauswerfer (130) verbunden und so ausgebildet und angeordnet ist, um die erste Kantenklemme (110) um die erste Achse (170) zu drehen, wenn die erste vorbestimmte Ausstoßkraft (300) gegen den ersten Kantenauswerfer (130) ausgeübt wird, wodurch der erste Ausstoßvorsprung (140) eine zweite vorbestimmte Ausstoßkraft (400) gegen die bewegliche Vorrichtung (200) entlang einer dritten Achse (177) ausübt, wobei die dritte Achse (177) die erste (170) und die zweite Achse (175) schneidet.

8. Halter nach einem der vorhergehenden Ansprüche, wobei der Halter (100, 101, 102, 103) ferner einen zweiten Kantenauswerfer (135) umfasst, der mechanisch mit der zweiten Kantenklemme (115) verbunden und so ausgebildet und angeordnet ist, um die zweite Kantenklemme (115) um die erste Achse (170) zu drehen und/oder die zweite Kantenklemme (115) von der ersten Kantenklemme (110) wegzubewegen, um die proximale Kante des mobilen Gerätes (200) freizugeben, wenn eine dritte vorbestimmte Auswurfkraft gegen den zweiten Kantenauswerfer (135) ausgeübt wird.

9. Halter nach einem der vorhergehenden Ansprüche, wobei der Halter (100, 101, 102, 103) ferner ein oder mehrere Befestigungsmittel umfasst, die so ausgebildet und angeordnet sind, dass der Halter (100, 101, 102, 103) starr an einer Auflagefläche befestigt werden kann.

10. Halter nach Anspruch 8 oder Anspruch 9, wobei das eine oder die mehreren Befestigungsmittel mechanisch am ersten Auswurfvorsprung (140) befestigt ist/sind.

11. Halter nach einem der vorhergehenden Ansprüche, wobei sich die erste Achse (170) und die zweite Achse (175) senkrecht schneiden.

12. Halter nach einem der vorhergehenden Ansprüche, wobei sich die zweite Achse (175) und die dritte Achse (177) senkrecht schneiden.

13. Halter nach einem der vorhergehenden Ansprüche, wobei die erste vorbestimmte Ausstoßkraft (300) für die manuelle Anwendung durch einen Menschen geeignet ist.

14. Halter nach einem der vorhergehenden Ansprüche, wobei die erste vorbestimmte Ausstoßkraft (300) im Bereich von 6 bis 10 Newton liegt.

15. Halter nach einem der vorhergehenden Ansprüche, wobei ein zweiter Ausstoßvorsprung (145), der mechanisch mit dem zweiten Kantenauswerfer (135) verbunden und so ausgebildet und angeordnet ist, um den ersten Kantenklemmer (110) um die erste Achse (170) zu drehen, wenn die dritte vorbestimmte Ausstoßkraft gegen den zweiten Kantenauswerfer (135) ausgeübt wird, wodurch der zweite Ausstoßvorsprung (145) eine vierte vorbestimmte Ausstoßkraft gegen das mobile Gerät (200) entlang der dritten Achse (177) ausübt.

16. Halter nach Anspruch 8, wobei die erste vorbestimmte Ausstoßkraft (300) und die dritte vorbestimmte Ausstoßkraft für die manuelle Anwendung durch zwei Stellen an einer Hand eines Menschen geeignet sind.

## Claims

1. Holder (100, 101, 102, 103) for a mobile device (200), wherein the holder (100, 101, 102, 103) comprises:
• a first (110) and a second (115) edge clamps, each extending along a first axis (170) and formed and arranged to cooperate along a second axis (175) to rigidly clamp opposing edges of the mobile device (200), wherein the second axis (175) intersects the first axis (170);
• one or more extension resistances (120) formed and arranged to resist a separation of the first edge clamp (110) and the second edge clamp (115) along the second axis (175);
• a first edge ejector (130) mechanically connected to the first edge clamp (110) and formed and arranged such that it turns the first edge clamp (110) about the first axis (170) to release a proximal edge of the mobile device (200) if a first predetermined ejection force (300) is applied against a first edge ejector (130);
wherein the one or more extension resistances (120) comprise one or more serpentine or zigzag shaped form elements formed and arranged to provide an area of non-linear resistance to the separation of the first (110) and second (115) edge clamps.

2. Holder according to claim 1, wherein the first edge clamp (110) and the second edge clamp (115) are formed and arranged to rigidly clamp parallel edges of a mobile device (200).

3. Holder according to claim 1 or 2, wherein one or more extension resistances (120) are formed and arranged such that they resist a separation of the first edge clamp (110) and the second edge clamp (115) in a plane comprising the first axis (170) and the second axis (175).

4. Holder according to any one of the preceding claims, wherein the first edge clamp (110), the second edge clamp (115), one or more extension resistances (120), one or more hinges (125), or any combination thereof comprise one or more elastomers or a combination of elastomers.

5. Holder according to claim 4, wherein the one or more elastomers is or are a polybutadiene, a synthetic rubber, a silicone rubber or a natural rubber.

6. Holder according to any one of the claims, wherein the first edge ejector (130) is formed and arranged such that it moves the first edge clamp (110) away from the second edge clamp (115) in order to release the proximal edge of the mobile device (200) if the first predetermined ejection force (300) is applied against a first edge ejector (130).

7. Holder according to any one of the preceding claims, wherein the holder (100, 101, 102, 103) further comprises a first ejection protrusion (140) which is mechanically connected to a first edge ejector (130) and is formed and arranged to rotate a first edge clamp (110) about the first axis (170) if the first predetermined ejection force (300) is applied against the first edge ejector (130), whereby the first ejection protrusion (140) exerts a second predetermined ejection force (400) against the mobile device (200) along a third axis (177), where the third axis (177) intersects the first (170) and second axes (175).

8. Holder according to any one of the preceding claims, wherein the holder (100, 101, 102, 103) further comprises a second edge ejector (135) which is mechanically connected to the second edge clamp (115) and is formed and arranged to turn the second edge clamp (115) about the first axis (170) and/or to move the second edge clamp (115) away from the first edge clamp (110) to release the proximal edge of the mobile device (200) if a third predetermined ejection force is applied against the second edge ejector (135).

9. Holder according to any one of the claims, wherein the holder (100, 101, 102, 103) further comprises one or more fastening means formed and arranged such that the holder (100, 101, 102, 103) can be rigidly secured to a support surface.

10. Holder according to claim 8 or claim 9, wherein the one or more fixing means is/are mechanically attached to a first ejection protrusion (140).

11. Holder according to any one of the claims, wherein the first axis (170) and the second axis (175) intersect perpendicularly.

12. Holder according to any one of the claims, wherein the second axis (175) and the third axis (177) intersect perpendicularly.

13. Holder according to any one of the claims, wherein the first predetermined ejection force (300) is suitable for manual application by Human.

14. Holder according to any one of the claims, wherein the first predetermined ejection force (300) is in the area of 6 to 10 newtons.

15. Holder according to any one of the claims, wherein a second ejection projection (145), which is mechanically connected to the second edge ejector (135) and is formed and arranged to rotate the first edge clamp (110) about the first axis (170) if the third predetermined ejection force is applied against the second edge ejector (135), whereby the second ejection projection (145) exerts a fourth predetermined ejection force against the mobile device (200) along the third axis (177).

16. Holder according to claim 8, wherein the first predetermined ejection force (300) and the third predetermined ejection force are suitable for manual application by two fingers of a human hand.

## Revendications

1. Support (100, 101, 102, 103) pour un appareil mobile (200), le support (100, 101, 102, 103) comprenant :
• une première (110) et une deuxième (115) pince de bord, s'étendant chacune le long d'un premier axe (170) et conçues et agencées de manière à coopérer le long d'un deuxième axe (175) pour serrer rigidement des bords opposés de l'appareil mobile (200), le deuxième axe (175) coupant le premier axe (170) ;
• une ou plusieurs résistances à l'étirement (120) qui sont conçues et disposées de manière à s'opposer à une séparation de la première pince de bord (110) et de la deuxième pince de bord (115) le long du deuxième axe (175) ;
• un premier éjecteur de bord (130) relié mécaniquement à la première pince de bord (110) et conçu et agencé de manière à faire tourner la première pince de bord (110) autour du premier axe (170) afin de libérer un bord proximal du appareil mobile (200) lorsqu'une première force d'éjection prédéterminée (300) est appliquée contre le premier éjecteur de bord (130);
dans lequel la ou les résistances à l'étirement (120) comprennent un ou plusieurs éléments de forme sinueuse ou en zigzag, qui sont conçus et agencés de manière à fournir une zone de résistance non linéaire à la séparation des première (110) et deuxième (115) pinces de bord.

2. Support selon la revendication 1, dans lequel la première pince de bord (110) et la deuxième pince de bord (115) sont conçues et agencées de manière à serrer rigidement les bords parallèles d'un appareil mobile (200).

3. Support selon la revendication 1 ou 2, dans lequel une ou plusieurs résistances à l'allongement (120) sont conçues et disposées de manière à s'opposer à une séparation de la première pince de bord (110) et de la deuxième pince de bord (115) dans un plan comprenant le premier axe (170) et le deuxième axe (175).

4. Support selon l'une des revendications précédentes, dans lequel la première pince de bord (110), la deuxième pince de bord (115), la ou les résistances à l'étirement (120), la ou les articulations (125) ou toute combinaison de celles-ci comprennent un ou plusieurs élastomères ou une combinaison d'élastomères.

5. Support selon la revendication 4, dans lequel un ou plusieurs élastomères sont un polybutadiène, un caoutchouc synthétique, un caoutchouc silicone ou un caoutchouc naturel.

6. Support selon l'une des revendications précédentes, dans lequel le premier éjecteur de bord (130) est en outre conçu et agencé de manière à éloigner la première pince de bord (110) de la deuxième pince de bord (115) afin de libérer le bord proximal de l'appareil mobile (200) lorsque la première force d'éjection prédéterminée (300) est appliquée contre le premier éjecteur de bord (130).

7. Support selon l'une des revendications précédentes, dans lequel le support (100, 101, 102, 103) comprend en outre une première saillie d'éjection (140) qui est reliée mécaniquement au premier éjecteur de bord (130) et qui est conçue et agencée pour faire tourner la première pince de bord (110) autour du premier axe (170) lorsque la première force d'éjection prédéterminée (300) est exercée contre le premier éjecteur de bord (130), ce qui fait que la première saillie d'éjection (140) exerce une deuxième force d'éjection prédéterminée (400) contre l' appareil mobile (200) le long d'un troisième axe (177), le troisième axe (177) coupant le premier axe (170) et le deuxième axe (175).

8. Support selon l'une des revendications précédentes, le support (100, 101, 102, 103) comprend en outre un deuxième éjecteur de bord (135) qui est relié mécaniquement à la deuxième pince de bord (115) et qui est conçu et agencé de manière à faire tourner la deuxième pince de bord (115) autour du premier axe (170) et/ou à éloigner la deuxième pince de bord (115) de la première pince de bord (110) afin de libérer le bord proximal de l'appareil mobile (200) lorsqu'une troisième force d'éjection prédéterminée est exercée contre le deuxième éjecteur de bord (135).

9. Support selon l'une des revendications précédentes, dans lequel le support (100, 101, 102, 103) comprend en outre un ou plusieurs moyens de fixation qui sont conçus et agencés de telle sorte que le support (100, 101, 102, 103) puisse être fixé de manière rigide à une surface d'appui.

10. Support selon la revendication 8 ou la revendication 9, dans lequel le ou les moyens de fixation sont fixés mécaniquement à la première saillie d'éjection (140).

11. Support selon l'une des revendications précédentes, dans lequel le premier axe (170) et le deuxième axe (175) se coupent perpendiculairement.

12. Support selon l'une des revendications précédentes, dans lequel le deuxième axe (175) et le troisième axe (177) se coupent perpendiculairement.

13. Support selon l'une des revendications précédentes, dans lequel la première force d'éjection prédéterminée (300) est adaptée à une utilisation manuelle par un être humain.

14. Support selon l'une des revendications précédentes, dans lequel la première force d'éjection prédéterminée (300) est comprise entre 6 et 10 newtons.

15. Support selon l'une des revendications précédentes, dans lequel une deuxième saillie d'éjection (145), reliée mécaniquement au deuxième éjecteur de bord (135), est conçue et disposée de manière à faire tourner le premier dispositif de pince de bord (110) autour du premier axe (170) lorsque la troisième force d'éjection prédéterminée est exercée contre le deuxième éjecteur de bord (135), ce qui fait que la deuxième saillie d'éjection (145) exerce une quatrième force d'éjection prédéterminée contre l'appareil mobile (200) le long du troisième axe (177).

16. Support selon la revendication 8, dans lequel la première force d'éjection prédéterminée (300) et la troisième force d'éjection prédéterminée sont adaptées à une utilisation manuelle par deux points d'appui sur une main humaine.
